# EUROPEAN PATENT SPECIFICATION

(11) **EP 3 947 524 B1**
(45) Date of publication and mention of the grant of the patent: **08.11.2023**
(21) Application number: 20710502.4
(22) Date of filing: 10.03.2020
(51) Int. Cl.: C08G 65/40, C08G 75/23, C08G 75/20

(54) **AMORPHOUS POLYMER (P) COMPRISING SEGMENTS (S1), (S2) AND (S3)**
AMORPHES POLYMER (P) MIT DEN SEGMENTEN (S1), (S2) UND (S3)
POLYMÈRE AMORPHE (P) COMPRENANT DES SEGMENTS (S1), (S2) ET (S3)

(30) Priority: 01.04.2019 EP 19166547
(43) Date of publication of application: 09.02.2022
(73) Proprietor: BASF SE, 67056 Ludwigshafen am Rhein (DE)
(72) Inventor: WEBER, Martin, 67056 Ludwigshafen (DE); MALETZKO, Christian, 67056 Ludwigshafen (DE); HENNENBERGER, Florian, 67056 Ludwigshafen (DE); WILMS, Axel, 67227 Frankenthal (DE)
(86) International application number: PCT/EP2020/056360
(87) International publication number: WO 2020/200666

(56) References cited:
- EP-A1- 2 225 328
- CN-A- 104 497 300
- CN-B- 103 613 763
- GB-A- 2 241 245
- JP-A- 2008 037 897
- XIAO ET AL: "Synthesis and characterization of novel poly(aryl ether sulfone ketone)s containing phthalazinone and biphenyl moieties", CHINESE CHEMICAL LETTERS, ELSEVIER, AMSTERDAM, NL, vol. 19, no. 2, 22 January 2008 (2008-01-22), pages 227-229, XP022438845, ISSN: 1001-8417, DOI: 10.1016/J.CCLET.2007.11.005

## Description

The present invention relates to an amorphous polymer (P) comprising segments (S1) containing a sulfone group, segments (S2) containing a ketone group and segments (S3) containing a polyarylene group, wherein the amorphous polymer (P) comprises 80.1 to 89% by mol of segments (S1) and 11 to 19.9% by mol of segments (S2), based on the total number of mols of segments (S1) and segments (S2) comprised in the amorphous polymer (P). Moreover, the present invention relates to a process for the preparation of said amorphous polymer (P), a composition comprising the amorphous polymer (P) and an article comprising the amorphous polymer (P).

Polyarylene ether sulfone polymers are high-performance thermoplastics in that they feature high heat resistance, good mechanical properties and inherent flame retardancy (E.M. Koch, H.-M. Walter, Kunststoffe 80 (1990) 1146; E. Döring, Kunststoffe 80, (1990) 1149, N. Inchaurondo-Nehm, Kunststoffe 98, (2008) 190). Polyarylene ethers are highly biocompatible and so are also used as material for forming dialysis membranes (N. A. Hoenich, K. P. Katapodis, Biomaterials 23 (2002) 3853).

Polyarylene ether sulfone polymers can be formed *inter alia* either via the hydroxide method, wherein a salt is first formed from the dihydroxy component and the hydroxide, or via the carbonate method.

General information regarding the formation of polyarylene ether sulfone polymers by the hydroxide method is found *inter alia* in R.N. Johnson et.al., J. Polym. Sci. A-1 5 (1967) 2375, while the carbonate method is described in J.E. McGrath et. al., Polymer 25 (1984) 1827.

Methods of forming polyarylene ether sulfone polymers from aromatic bishalogen compounds and aromatic bisphenols or salts thereof in an aprotic solvent in the presence of one or more alkali metal or ammonium carbonates or bicarbonates are known to a person skilled in the art and are described in EP-A 297 363 for example.

High-performance thermoplastics such as polyarylene ether sulfone polymers are formed by polycondensation reactions which are typically carried out at a high reaction temperature in dipolar aprotic solvents, for example dimethylformamide (DMF), dimethylacetamide (DMAc), sulfolane, dimethylsulfoxide (DMSO) and N-Methyl-2-pyrrolidone (NMP).

Applications of polyarylene ether sulfone polymers in polymer membranes are increasingly important.

Polyarylene ether sulfone polymers are amorphous. The amorphous polyarylene ether sulfone polymers show, compared to semi-crystalline polymers like polyphenylene sulfides, an inferior resistance against organic fluids like FAM B (toluene containing test fluid) or Skydrol (mixture of phosphates).

In order to improve the resistance against organic solvents, EP 2 225 328 describes semi-crystalline polymers containing sulfonyl groups, ketone groups and polyarylene groups. According to EP 2 225 328, preferably 4,4'-dichlorodiphenyl sulfone, 4,4'-dichlorobenzophenone and 4,4'-dihydroxybiphenyl are reacted in diphenylsulfone in order to obtain the semi-crystalline polymer. The melting temperature of the semi-crystalline polymers according to EP 2 225 328 is above 300°C. The polymers described in EP 2 225 328, however, show poor solubility in common solvents like N-methylpyrrolidone (NMP) or dimethylacetamide (DMAc) and, therefore, problems occur when these polymers are used to produce membranes via phase inversion.

Moreover the polymers described in EP 2 225 328 are not transparent.

JP 2008-37897 discloses a sulfonic group-containing photocrosslinkable polymer which can comprise sulfone groups, ketone groups and polyarylene groups.

*The article "*Synthesis and characterization of novel poly(aryl ether sulfone ketone)s containing phthalazinone and biphenyl moieties" of L. H. Xiao et al., Chin. Chem. Lett. 19 (2008) 227 discloses the preparation of an amorphous poly(phthalazinone ether sulfone ketone) by reacting, inter alia, 4,4'-biphenol (BP), 4,4'dichlorobenzosulfone (DCS) and 4,4'-difluorobenzophenone (DFK).

CN 103613763 and CN 104497300 describe the synthesis of a semi-crystalline high-flow polyphenylene ether sulfone ketone comprising sulfone groups, ketone groups and polyarylene groups.

GB 2 241 245 discloses an amorphous polysulfoneetherketone polymer comprising sulfone groups, ketone groups and polyarylene groups, wherein the mol ratio of sulfone groups to ketone groups is 1 :1.

The present invention thus has for its object to provide an amorphous polymer (P) which does not retain the disadvantages of the prior art or only in diminished form. The amorphous polymer (P) should show a good chemical resistance against organic solvents like FAM B or Skydrol. Another object of the present invention is to provide a process for the preparation of said amorphous polymer (P). The process should preferably be performed within short reaction times.

This object is achieved by the amorphous polymer (P) comprising
segments (S1) of formula 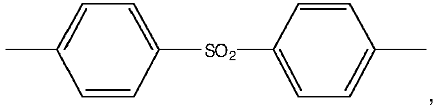
segments (S2) of formula 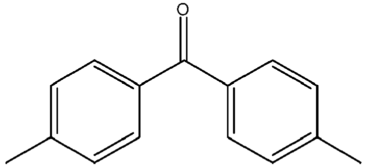 and
segments (S3) of formula 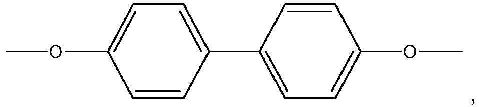
wherein the amorphous polymer (P) comprises
   80.1 to 89% by mol of segments (S1) and
   11 to 19.9% by mol of segments (S2),
   based on the total number of mols of segments (S1) and segments (S2) comprised in the amorphous polymer (P).

It has surprisingly been found that the amorphous polymer (P) shows a good chemical resistance against organic solvents like FAM B or Skydrol and that the amorphous polymer shows a good solubility in common solvents like N-methylpyrrolidone (NMP) or dimethylacetamide (DMAc). Moreover, articles made from the amorphous polymer (P) are transparent.

The present invention will be described in more detail hereinafter.

The amorphous polymer (P) according to the present invention generally comprises the above defined segments (S1), (S2) and (S3). The segments (S1), (S2), and (S3) may be present in the amorphous polymer (P) according to the present invention in its backbone, in its chain ends and/or in its repeat units. Preferably, the segments (S1), (S2) and (S3) are comprised in the repeat units of the amorphous polymer (P). The amorphous polymer (P) according to the present invention is preferably derived from two or more repeat units. More preferably, it is derived from two different repeat units.

The amorphous polymer (P) comprises 80.1 to 89% by mol, even more preferably 80.2 to 88% by mol, particularly preferred 80.3 to 87% by mol, and most preferred 80.4 to 86.5% by mol of segments (S1) and 11 to 19.9% by mol, even more preferably 12 to 19.8% by mol, particularly preferred 13 to 19.7% by mol, and most preferred 13.5 to 19.6% by mol of segments (S2), in each case based on the total number of moles of segments (S1) and segments (S2) comprised in the amorphous polymer (P).

In another preferred embodiment, the number of moles of segments (S1) over the number of moles of segments (S2) ratio contained in the amorphous polymer (P) is from 4 to 9, more preferably from 4.02 to 8.09, even more preferably from 4.05 to 7.33, particularly preferred from 4.08 to 6.69, and most preferred from 4.10 to 6.41.

The term "amorphous" in view of the amorphous polymer (P) according to the invention in a preferred embodiment is defined as follows. In a preferred embodiment, the term "amorphous" means that the amorphous polymer (P) has a melting enthalpy ΔHₘ in the range of 0 to 5 W/g, preferably in the range of 0 to 4 W/g, even more preferably in the range of 0 to 3 W/g, particularly preferred in the range of 0 to 2.5 W/g, and most preferred in the range of 0 to 2 W/g. In another most preferred embodiment, the amorphous polymer (P) does not show a melting point. In this case the melting enthalpy ΔHₘ is 0. The abbreviation W/g means watt per gram.

The term "amorphous" in view of the amorphous polymer (P) according to the invention in a preferred embodiment, moreover, is defined as follows. In a preferred embodiment, the term "amorphous", moreover, means that the amorphous polymer (P) has a crystallization enthalpy ΔH_{c} in the range of 0 to 5 W/g, preferably in the range of 0 to 4 W/g, even more preferably in the range of 0 to 3 W/g, particularly preferred in the range of 0 to 2.5 W/g, and most preferred in the range of 0 to 2 W/g. In another most preferred embodiment, the amorphous polymer (P) does not show a crystallization point. In this case the crystallization enthalpy ΔHₘ is 0. The abbreviation W/g means watt per gram.

The melting enthalpy ΔHₘ (if any) and the crystallization enthalpy ΔH_{c} (if any) are determined via DSC (differential scanning calorimetry) starting at 20°C heating the a sample of the amorphous polymer (P) with a rate of 20 K/min up to a temperature of 360°C, followed by cooling with a rate of >100 K/min down to 20°C, followed by a second heating with a rate of 20 K/min up to 360°C followed by a second cooling with a rate of >100 K/min down to 20°C, wherein the melt enthalpy ΔHₘ and the crystallization enthalpy ΔH_{c} are determined during the second heating and the second cooling.

If the amorphous polymer (P) is annealed at 250°C for 0.5 hours, it is in some cases possible that via DSC a small phase transition (melting point) can be detected, showing a melt enthalpy ΔHₘ in the range of 0.1 to <4 W/g. If the amorphous polymer (P) is annealed at 250°C for 0.5 hours, moreover, it is in some cases possible that via DSC a small phase transition (crystallization point) can be detected, showing a crystallization enthalpy ΔH_{c} in the range of 0.1 to <4 W/g.

Without annealing the amorphous polymer (P) in a preferred embodiment via DSC (using the above described method) no melting point can be detected. Without annealing the amorphous polymer (P), moreover, in a preferred embodiment via DSC (using the above described method) no crystallization point can be detected.

### Repeat Unit (RU1)

The amorphous polymer (P) as described above may comprise repeat units (RU1), obtainable by the reaction between at least one aromatic dihalogen compound (D1,1) comprising at least one segment (S1), and at least one aromatic dihydroxy compound (aDHy1). The aromatic dihalogen compound (D1,1) is also referred to as "aromatic dihalogen sulfone compound (D1,1)". These terms are used synonymously and have the same meaning. Repeat unit (RU1) comprises the segment (S1). Repeat unit (RU1) may comprise two or more segments (S1). In a preferred embodiment the repeat unit (RU1) comprises one segment (S1). Repeat unit (RU1) may also comprise segments (S2) and/or segments (S3). It may also be free of segments (S2) and segments (S3). In a preferred embodiment the repeat unit (RU1) comprises a segment (S1) and segment (S2) or segment (S3). In a more preferred embodiment repeat unit (RU1) comprises segment (S1) and segment (S3).

In a particularly preferred embodiment the repeat unit (RU1) consists of a segment (S1) and segment (S2) or segment (S3). In a most preferred embodiment repeat unit (RU1) consists of segment (S1) and segment (S3).

The aromatic dihalogen compound (D1,1) from which the repeat unit (RU1) is obtainable is preferably a 4,4'-dihalodiphenylsulfone or a 4,4'-bis[(4-chlorophenyl)sulfonyl]-1,1'-biphenyl. More preferably, it is a 4,4'-dihalodiphenylsulfone. Still more preferably the 4,4'-dihalodiphenylsulfone is selected from the group consisting of 4,4'-dichlorodiphenylsulfone, 4,4'-difluorodiphenylsulfone and mixtures thereof, wherein 4,4'-dichlorodiphenylsulfone is especially preferred.

The aromatic dihydroxy compound (aDHy1) from which the repeat unit (RU1) is obtainable is preferably 4,4'-biphenol, 4,4'-dihydroxybenzophenone or mixtures thereof, wherein 4,4'-biphenol is especially preferred.

In a particularly preferred embodiment, the repeat unit (RU1) is obtained by the reaction of the monomers 4,4'-dichlorodiphenylsulfone and 4,4'-biphenol.

### Repeat Unit (RU2)

The amorphous polymer (P) as described above may comprise repeat units (RU2), obtainable by the reaction between at least one aromatic dihalogen compound (D2,1) comprising at least one segment (S2), and at least one aromatic dihydroxy compound (aDHy2). The aromatic dihalogen compound (D2,1) is also referred to as "aromatic dihalogen ketone (D2,1)". These terms are used synonymously and have the same meaning. Repeat unit (RU2) comprises the segment (S2). Repeat unit (R2) may comprise two or more segments (S2). In a preferred embodiment the repeat unit (RU2) comprises one segment (S2). Repeat unit (RU2) may also comprise segments (S1) and/or segments (S3). It may also be free of segments (S1) and segments (S3). In a preferred embodiment the repeat unit (RU2) comprises a segment (S2) and segment (S1) or segment (S3). In a more preferred embodiment repeat unit (RU2) comprises segment (S2) and segment (S3).

In a particularly preferred embodiment the repeat unit (RU2) consists of a segment (S2) and segment (S1) or segment (S3). In a most preferred embodiment repeat unit (RU2) consists of segment (S2) and segment (S3).

The aromatic dihalogen compound (D2,1) from which the repeat unit (RU2) is obtainable is preferably a 4,4'-dihalobenzophenone. More preferably the 4,4'-dihalobenzophenone is selected from the group consisting of 4,4'-dichlorobenzophenone, 4,4'-difluorobenzophenone and mixtures thereof, wherein 4,4'-dichlorobenzophenone is especially preferred.

The aromatic dihydroxy compound (aDHy2) from which the repeat unit (RU2) is obtainable is preferably 4,4'-biphenol, 4,4'-dihydroxybenzophenone or mixtures thereof, wherein 4,4'-biphenol is especially preferred.

In a particularly preferred embodiment, the repeat unit (RU2) is obtained by the reaction of the monomers 4,4'-dichlorobenzophenone and 4,4'-biphenol.

### Repeat Unit (RU3)

The amorphous polymer (P) as described above may comprise repeat units (RU3), obtainable by the reaction between at least one aromatic dihydroxy compound (D2,2) comprising at least one segment (S2), and at least one aromatic dihalogen compound (aDHa1). Repeat unit (RU3) comprises the segment (S2). Repeat unit (R3) may comprise two or more segments (S2). In a preferred embodiment the repeat unit (RU3) comprises one segment (S2). Repeat unit (RU3) may also comprise segments (S1) and/or segments (S3). It may also be free of segments (S1) and segments (S3). In a preferred embodiment the repeat unit (RU3) comprises a segment (S2) and segment (S1) or segment (S3). In a more preferred embodiment repeat unit (RU3) comprises segment (S2) and segment (S1).

In a particularly preferred embodiment the repeat unit (RU3) consists of a segment (S2) and segment (S1) or segment (S3). In a most preferred embodiment repeat unit (RU3) consists of segment (S2) and segment (S1).

The aromatic dihydroxy compound (D2,2) from which the repeat unit (RU3) is obtainable is preferably a 4,4'-dihydroxybenzophenone.

The aromatic dihalogen compound (aDHa1) is preferably a 4,4'-dihalodiphenylsulfone or a 4,4'-bis[(4-chlorophenyl)sulfonyl]-1,1'-biphenyl. More preferably, it is a 4,4'-dihalodiphenylsulfone. Still more preferably the 4,4'-dihalodiphenylsulfone is selected from the group consisting of 4,4'-dichlorodiphenylsulfone, 4,4'-difluorodiphenylsulfone and mixtures thereof, wherein 4,4'-dichlorodiphenylsulfone is especially preferred.

In a particularly preferred embodiment, the repeat unit (RU3) is obtained by the reaction of the monomers 4,4'-dihydroxybenzophenone and 4,4'-dichlorodiphenylsulfone.

### Repeat Unit (RU4)

The amorphous polymer (P) as described above may comprise repeat units (RU4), obtainable by the reaction between at least one aromatic dihydroxy compound (D3,1) comprising at least one segment (S3), and at least one aromatic dihalogen compound (aDHa2). Repeat unit (RU4) comprises the segment (S3). Repeat unit (R4) may comprise two or more segments (S3). In a preferred embodiment the repeat unit (RU4) comprises one segment (S3). Repeat unit (RU4) may also comprise segments (S1) and/or segments (S2). It may also be free of segments (S1) and segments (S2). In a preferred embodiment the repeat unit (RU4) comprises a segment (S3) and segment (S1) or segment (S2). In a more preferred embodiment repeat unit (RU4) comprises segment (S3) and segment (S1).

In a particularly preferred embodiment the repeat unit (RU4) consists of a segment (S3) and segment (S1) or segment (S2). In a most preferred embodiment repeat unit (RU4) consists of segment (S3) and segment (S1). In this case repeat unit (R4) is equal to repeat unit (RU1).

The aromatic dihydroxy compound (D3,1) from which the repeat unit (RU4) is obtainable is preferably 4,4'-biphenol.

The aromatic dihalogen compound (aDHa2) is preferably a 4,4'-dihalodiphenylsulfone or a 4,4'-bis[(4-chlorophenyl)sulfonyl]-1,1'-biphenyl. More preferably, it is a 4,4'-dihalodiphenylsulfone. Still more preferably the 4,4'-dihalodiphenylsulfone is selected from the group consisting of 4,4'-dichlorodiphenylsulfone, 4,4'-difluorodiphenylsulfone and mixtures thereof, wherein 4,4'-dichlorodiphenylsulfone is especially preferred.

In a particularly preferred embodiment, the repeat unit (RU4) is obtained by the reaction of the monomers 4,4'-biphenol and 4,4'-dichlorodiphenylsulfone. In this case repeat unit (R4) is equal to repeat unit (RU1).

The amorphous polymer (P) has a polydispersity (Q) of generally ≤ 5, and preferably ≤ 4.5.

The polydispersity (Q) is defined as the ratio M_{w} : Mₙ (M_{w}/Mₙ). In one preferred embodiment, the polydispersity (Q) of the amorphous polymer (P) is in the range from 2.0 to ≤ 5 and preferably in the range from 2.1 to ≤ 4,5.

The weight average molecular weight (M_{w}) and the number average molecular weight (Mₙ) are measured using gel permeation chromatography.

The polydispersity (Q) and the average molecular weight of the amorphous polymer (P) were measured using gel permeation chromatography (GPC). Dimethylacetamide (DMAc) was used as solvent and narrowly distributed polymethyl methacrylate was used as standard in the measurement.

The weight average molecular weight (M_{w}) of the amorphous polymer (P) obtainable by the method of the present invention is generally in the range from 30,000 to 120,000 g/mol, preferably in the range from 40,000 to 100,000 g/mol and more preferably in the range from 45,000 to 80,000 g/mol. The weight average molecular weights (M_{w}) are measured using gel permeation chromatography (GPC). This measurement is carried out as described above.

The terminal groups of the amorphous polymer (P) are generally either halogen groups, in particular chlorine groups, or etherified groups, in particular alkyl ether groups. Etherified end groups are obtainable by reacting the terminal OH/phenoxide groups with suitable etherifying agents.

Examples of suitable etherifying agents are monofunctional alkyl or aryl halides, for example C₁-C₆ alkyl chlorides, bromides or iodides, preferably methyl chloride, or benzyl chloride, bromide or iodide, or mixtures thereof. The terminal groups of the polyarylene ether sulfone polymer according to the present invention are preferably halogen groups, in particular chlorine, and also alkoxy groups, in particular methoxy, aryloxy groups, in particular phenoxy, or benzyloxy.

The total weight of repeat units (RU1), (RU2), (RU3) and (RU4) contained in the amorphous polymer (P) over the total weight of the amorphous polymer (P) ratio is advantageously above 0.7. This ratio is preferably above 0.8, more preferably above 0.9 and still more preferably above 0.95. Most preferably, the polymer according to the present invention comprises no other repeat units than repeat units (RU1), (RU2), (RU3) and (R4).

In a preferred embodiment the total weight of repeat units (RU1), (RU2) and/or (RU3) contained in the amorphous polymer (P) over the total weight of the amorphous polymer (P) ratio is advantageously above 0.7. This ratio is preferably above 0.8, more preferably above 0.9 and still more preferably above 0.95. Most preferably, the polymer according to the present invention comprises no other repeat units unit than repeat units (RU1), (RU2) and/or (RU3).

In another more preferred embodiment the total weight of repeat units (RU1) and (RU2) contained in the amorphous polymer (P) over the total weight of the amorphous polymer (P) ratio is advantageously above 0.7. This ratio is preferably above 0.8, more preferably above 0.9 and still more preferably above 0.95. Most preferably, the polymer according to the present invention comprises no other repeat units unit than repeat units (RU1) and (RU2).

In a preferred embodiment the repeat units (RU1) are obtainable by the reaction of the monomers 4,4'-dichlorodiphenylsulfone and 4,4'-biphenol, the repeat units (RU2) are obtainable by the reaction of the monomers 4,4'-dichlorobenzophenone and 4,4'-biphenol and/or the repeat units (RU3) are obtained by the reaction of the monomers 4,4'-dihydroxybenzophenone and 4,4'-dichlorodiphenylsulfone.

In a preferred embodiment the amorphous polymer (P) is obtainable by the reaction of the above defined compounds for the preparation of the repeat units (RU1), (RU2) and/or (RU3), wherein the above made descriptions and preferences apply accordingly.

In a preferred embodiment the amorphous polymer (P) is obtainable by the reaction of
the aromatic dihalogen compound (D1,1) and the aromatic dihydroxy compound (aDHy1) and
the aromatic dihalogen compound (D2,1) and the aromatic dihydroxy compound (aDHy2),

wherein the aromatic dihydroxy compounds (aDHy1) and (aDHy2) are both 4,4'-biphenol, wherein the aromatic dihalogen compound (D1,1) is 4,4'-dichlorodiphenylsulfone and wherein the molar amount of the aromatic dihalogen compound (D1,1) used in the reaction is in the range of 80 to 90% by mol, more preferably 80.1 to 89% by mol, even more preferably 80.2 to 88% by mol, particularly preferred 80.3 to 87% by mol, and most preferred 80.4 to 86.5% by mol,
and wherein the molar amount of the aromatic dihalogen compound (D2,1) used in the reaction is in the range of 10 to 20% by mol, more preferably 11 to 19.9% by mol, even more preferably 12 to 19.8% by mol, particularly preferred 13 to 19.7% by mol, and most preferred 13.5 to 19.6% by mol,

in each case based on the total molar amount of aromatic dihalogen compound (D1,1) aromatic dihalogen compound (D2,1) used in the reaction.

In another preferred embodiment, the number of moles of aromatic dihalogen compound (D1,1) over the number of moles of dihalogen compound (D2,1) used in the reaction from which the amorphous polymer (P) is obtainable is from 4 to 9, more preferably from 4.02 to 8.09, even more preferably from 4.05 to 7.33, particularly preferred from 4.08 to 6.69, and most preferred from 4.10 to 6.41.

A further aspect of the invention is a composition comprising the amorphous polymer (P). In a preferred embodiment, this composition can comprise at least one further ingredient. The further ingredient can be preferably selected from the group consisting of further polymers, solvents, fillers, additives, colorants, reinforcing agents, lubricating agents, heat stabilizers, processing aids, antistatic agents, antioxidants and flame retardants. Suitable further polymers are, for example, polysulfones, polyethersulfones, polyphenylenesulfones, polyetherimides, polyamide-imides, preferably having a thermal stability to withstand processing temperatures above 350°C. Suitable fillers are, for example, glass beads, glass fibers, carbon fibers, talc, calcium carbonate, wollastonite and polyamide fibers.

Suitable colorants are, for example, pigments or dyes like titanium dioxide, zinc oxides, carbon black and the like.

The composition according to the invention preferably comprises more than 50% by weight, more preferably more than 75% by weight and particularly preferred more than 90% by weight of the amorphous polymer (P), based on the total weight of the composition. The weight of the at last one ingredient(s) is generally in the range of 0 to 50%, preferably from 0 to 25% and particularly preferred from 0 to 10% by weight, based on the total weight of the composition. In another embodiment, the composition may be substantially free of the above mentioned ingredients.

Another aspect of the present invention is an article comprising the amorphous polymer (P). In a preferred embodiment, the article is selected from the group consisting of a fitting, pipe, a valve, a manifold, an aircraft interior panel or component, a cookware, a medical instrument or part of instrument, a medical case or tray, a laboratory animal cage, a laboratory equipment, a coating, a composite, a fiber and a fabric.

### Process for the preparation of the amorphous polymer (P)

Another aspect of the present invention is a process for the preparation of the amorphous polymer (P). The aforementioned descriptions and preferences in view of the amorphous polymer (P) apply for the process for the preparation of the amorphous polymer (P) accordingly. Moreover, the descriptions and preferences made hereinafter in view of the process for the preparation of the amorphous polymer (P) apply for the amorphous polymer (P) accordingly.

Another object of the present invention is a process for the preparation of the amorphous polymer (P) by converting a reaction mixture (R_{G}) comprising as components:
(A1) at least one aromatic dihalogen sulfone compound (D1,1),
(A2) at least one aromatic dihalogen ketone compound (D2,1), ,
(B1) 4,4'-biphenol,
(C) at least one carbonate component comprising at least 80% by weight of potassium carbonate, based on the overall weight of component (C) in the reaction mixture (R_{G}),
(D) at least one aprotic polar solvent.

In a preferred embodiment, the inventive process the preparation of the amorphous polymer (P) comprises step I) converting a reaction mixture (R_{G}) comprising the components (A1), (A2), (B1), (C) and (D) described above.

The components (A1), (A2) and (B1) enter into a polycondensation reaction.

Component (D) acts as a solvent and component (C) acts as a base to deprotonate component (B1) prior or during the condensation reaction.

Reaction mixture (R_{G}) is understood to mean the mixture that is used in the process according to the present invention for preparing the amorphous polymer (P). In the present case all details given with respect to the reaction mixture (R_{G}) thus, relate to the mixture that is present prior to the polycondensation. The polycondensation takes place during the process according to the invention in which the reaction mixture (R_{G}) reacts by polycondensation of components (A1), (A2) and (B1) to give the target product, the amorphous polymer (P). The mixture obtained after the polycondensation which comprises the amorphous polymer (P) target product is also referred to as product mixture (P_{G}). The product mixture (P_{G}) usually furthermore comprises the at least one aprotic polar solvent (component (D)) and a halide compound. The halide compound is formed during the conversion of the reaction mixture (R_{G}). During the conversion first, component (C) reacts with component (B1) to deprotonate component (B1). Deprotonated component (B1) then reacts with component (A1) wherein the halide compound is formed. This process is known to the person skilled in the art.

In one embodiment of the present invention in step I) a first amorphous polymer (P1) is obtained. This embodiment is described in more detail below. In this embodiment the product mixture (P_{G}) comprises the first amorphous polymer (P1). The product mixture (P_{G}) then usually furthermore comprises the at least one aprotic polar solvent (component (D)) and a halide compound. For the halide compound the above described details hold true.

The components of the reaction mixture (R_{G}) are generally reacted concurrently. The individual components may be mixed in an upstream step and subsequently be reacted. It is also possible to feed the individual components into a reactor in which these are mixed and then reacted.

In the process according to the invention, the individual components of the reaction mixture (R_{G}) are generally reacted concurrently in step I). This reaction is preferably conducted in one stage. This means, that the deprotonation of component (B1) and also the condensation reaction between components (A1), (A2) and (B1) take place in a single reaction stage without isolation of the intermediate products, for example the deprotonated species of component (B1).

The process according to step I) of the invention is carried out according to the so called "carbonate method". The process according to the invention is not carried out according to the so called "hydroxide method". This means, that the process according to the invention is not carried out in two stages with isolation of phenolate anions.

It is furthermore preferred that the reaction mixture (R_{G}) does not comprise toluene or chlorobenzene. It is particularly preferred that the reaction mixture (R_{G}) does not comprise any substance which forms an azeotrope with water.

Another object of the present invention is therefore also a process wherein the reaction mixture (R_{G}) does not comprise any substance which forms an azeotrope with water.

The molar ratio of the sum of components (A1), (A2) and component (B1) (ratio (A1+A2) / (B1)) derives in principle from the stoichiometry of the polycondensation reaction which proceeds with theoretical elimination of hydrogen chloride and it is established by the person skilled in the art in a known manner.

Preferably, the molar ratio of component (B1) to the sum of components (A1) and (A2) is from 0.95 to 1.08, especially from 0.96 to 1.06, most preferably from 0.97 to 1.05.

Another object of the present invention is therefore also a process wherein the molar ratio of component (B1) to the sum of components (A1), (A2) in the reaction mixture (R_{G}) is in the range from 0.97 to 1.08.

In a preferred embodiment, the reaction mixture (R_{G}), additionally to components (A1), (A2), (B1), (C) and (D), comprises at most 15% by weight, more preferred at most 7.5% by weight, particularly preferred at most 2.5% by weight and most preferred at most 1% by weight of further components which are different from components (A1), (A2), (B1), (C) and (D), based on the total weight of the reaction mixture (R_{G}).

In another most preferred embodiment, the reaction mixture (R_{G}) consists of the components (A1), (A2), (B1), (C) and (D).

Preferably, the conversion in the polycondensation reaction is at least 0.9.

Process step I) for the preparation of the amorphous polymer (P) is typically carried out under conditions of the so called "carbonate method". This means that the reaction mixture (R_{G}) is reacted under the conditions of the so called "carbonate method". The reaction (polycondensation reaction) is generally conducted at temperatures in the range from 80 to 250 °C, preferably in the range from 100 to 220 °C. The upper limit of the temperature is determined by the boiling point of the at least one aprotic polar solvent (component (D)) at standard pressure (1013.25 mbar). The reaction is generally carried out at standard pressure. The reaction is preferably carried out over a time interval of 2 to 12 h, particularly in the range from 3 to 10 h.

The isolation of the obtained amorphous polymer (P) obtained in the process according to the present invention in the product mixture (P_{G}) may be carried out for example by precipitation of the product mixture (P_{G}) in water or mixtures of water with other solvents. The precipitated amorphous polymer (P) can subsequently be extracted with water and then be dried. In one embodiment of the invention, the precipitate can also be taken up in an acidic medium. Suitable acids are for example organic or inorganic acids for example carboxylic acid such as acetic acid, propionic acid, succinic acid or citric acid and mineral acids such as hydrochloric acid, sulfuric acid or phosphoric acid.

In one embodiment of the present invention, in step I) a first amorphous polymer (P1) is obtained. The inventive process then preferably additionally comprises step
II) reacting the first amorphous polymer (P1) obtained in step I) with an alkyl halide.

Another object of the present invention is therefore also a process, wherein in step I) a first amorphous polymer (P1) is obtained and wherein the process additionally comprises step
II) reacting the first amorphous polymer (P1) obtained in step I) with an alkyl halide.

To the person skilled in the art it is clear that if step II) is not carried out then the first amorphous polymer (P1) corresponds to the amorphous polymer (P).

The first amorphous polymer (P1) usually is the product of the polycondensation reaction of components (A1), (A2) and component (B1) comprised in the reaction mixture (R_{G}). The first amorphous polymer (P1) can be comprised in the above-described product mixture (P_{G}), which is obtained during the conversion of the reaction mixture (R_{G}). As described above, this product mixture (P_{G}) comprises the first amorphous polymer (P1), component (D) and a halide compound. The first amorphous polymer (P1) can be comprised in this product mixture (P_{G}) when it is reacted with the alkyl halide.

The separation of the halide compound from the first product mixture (P1) can be carried out by any method known to the skilled person, for example via filtration or centrifugation.

The first amorphous polymer (P1) usually comprises terminal hydroxy groups. In step II) these terminal hydroxy groups are further reacted with the alkyl halide to obtain the polyarylene ether sulfone polymer (P). Preferred alkyl halides are in particular alkyl chlorides having linear or branched alkyl groups having from 1 to 10 carbon atoms, in particular primary alkyl chlorides, particularly preferably methyl halides, in particular methyl chloride.

The reaction according to step II) is preferably carried out at a temperature in the range from 90 °C to 160 °C, in particular in the range from 100 °C to 150 °C. The time required can vary over a wide range of times and is usually at least 5 minutes, in particular at least 15 minutes. It is preferable that the time required for the reaction according to step II) is from 15 minutes to 8 hours, in particular from 30 minutes to 4 hours.

Various methods can be used for the addition of the alkyl halide. It is moreover possible to add a stoichiometric amount or an excess of the alkyl halide, and the excess can be by way of example by up to 5-fold. In one preferred embodiment the alkyl halide is added continuously, in particular via continuous introduction in the form of a gas stream.

In step II) usually a polymer solution (PL) is obtained which comprises the amorphous polymer (P) and component (D). If in step II) the product mixture (P_{G}) from step I) was used, then the polymer solution (PL) typically furthermore comprises the halide compound. It is possible to filter the polymer solution (PL) after step II). The halide compound can thereby be removed.

The present invention therefore also provides a process wherein in step II) a polymer solution (PL) is obtained and wherein the process furthermore comprises step
III) filtration of the polymer solution (PL) obtained in step II).

The isolation of the obtained amorphous polymer (P) obtained in the step II) according to the present invention in the polymer solution (PL) may be carried out as the isolation of the amorphous polymer (P) obtained in the product mixture (P_{G}). For example, the isolation may be carried out by precipitation of the polymer solution (PL) in water or mixtures of water with other solvents. The precipitated amorphous polymer (P) can subsequently be extracted with water and then be dried. In one embodiment of the invention, the precipitate can also be taken up in an acidic medium. Suitable acids are for example organic or inorganic acids for example carboxylic acid such as acetic acid, propionic acid, succinic acid or citric acid and mineral acids such as hydrochloric acid, sulfuric acid or phosphoric acid.

### Component (A1)

The reaction mixture (R_{G}) comprises at least one aromatic dihalogen sulfone compound (D1,1). The term "at least one aromatic dihalogen sulfone compound (D1,1)", in the present case, is understood to mean exactly one aromatic dihalogen sulfone compound (D1,1) and also mixtures of two or more aromatic dihalogen sulfone compounds (D1,1).

For component (A1), the aformentioned descriptions and preferences in view of the aromatic dihalogen sulfone compound (D1,1) apply accordingly.

### Component (A2)

The reaction mixture (R_{G}) comprises at least one aromatic dihalogen ketone compound (D2,1). The term "at least one aromatic dihalogen ketone compound (D2,1)", in the present case is understood to mean exactly one aromatic dihalogen ketone compound (D2,1) and also mixtures of two or more aromatic dihalogen ketone compounds (D2,1). For component (A2), the aforementioned descriptions and preferences in view of the aromatic dihalogen ketone compound (D2,1) apply accordingly.

### Component (B1)

For component (B1), the aforementioned descriptions and preferences in view of the at least one aromatic dihydroxy compounds (aDHy1) and (aDHy2) apply accordingly. Component (B1) in the present case is understood to mean exactly one aromatic dihydroxy compound (aDHy1; aDHy2) as well as a mixture of two or more aromatic dihydroxy compounds (aDHy1; aDHy2). In a preferred embodiment, component (B1) is 4,4'-biphenol.

### Component (C)

The reaction mixture (R_{G}) comprises at least one carbonate component as component (C). The term "at least one carbonate component" in the present case, is understood to mean exactly one carbonate component and also mixtures of two or more carbonate components. The at least one carbonate component is preferably at least one metal carbonate. The metal carbonate is preferably anhydrous.

Preference is given to alkali metal carbonates and/or alkaline earth metal carbonates as metal carbonates. At least one metal carbonate selected from the group consisting of sodium carbonate, potassium carbonate and calcium carbonate is particularly preferred as metal carbonate. Potassium carbonate is most preferred.

For example, component (C) comprises at least 50 % by weight, more preferred at least 70 % by weight and most preferred at least 90 % by weight of potassium carbonate based on the total weight of the at least one carbonate component in the reaction mixture (R_{G}).

Another object of the present invention is therefore also a process wherein component (C) comprises at least 50 % by weight of potassium carbonate, based on the total weight of component (C).

In a preferred embodiment component (C) consists essentially of potassium carbonate.

"Consisting essentially of" in the present case is understood to mean that component (C) comprises more than 99 % by weight, preferably more than 99.5 % by weight, particular preferably more than 99.9 % by weight of potassium carbonate based in each case on the total weight of component (C) in the reaction mixture (R_{G}).

In a particularly preferred embodiment component (C) consists of potassium carbonate.

Potassium carbonate having a volume weighted average particle size of less than 200 µm is particularly preferred as potassium carbonate. The volume weighted average particle size of the potassium carbonate is determined in a suspension of potassium carbonate in chlorobenzene/sulfolane (60/40) using a Malvern Mastersizer 2000 Instrument particle size analyser.

In a preferred embodiment, the reaction mixture (R_{G}) does not comprise any alkali metal hydroxides or alkaline earth metal hydroxides.

### Component (D)

The reaction mixture (R_{G}) comprises at least one aprotic polar solvent as component (D). "At least one aprotic polar solvent", according to the invention, is understood to mean exactly one aprotic polar solvent and also mixtures of two or more aprotic polar solvents.

Suitable aprotic polar solvents are, for example, selected from the group consisting of anisole, dimethylformamide, dimethylsulfoxide, N-methylpyrrolidone, N-ethylpyrrolidone, sulfolane and N,N-dimethylacetamide.

Preferably, component (D) is selected from the group consisting of N-methylpyrrolidone, N,N-dimethylacetamide, dimethylsulfoxide and dimethylformamide. N-methylpyrrolidone is particularly preferred as component (D).

Another object of the present invention is therefore also a process wherein component (D) is selected from the group consisting of N-methylpyrrolidone, N,N-dimethylacetamide, dimethylsulfoxide and dimethylformamide.

It is preferred that component (D) does not comprise sulfolane. It is furthermore preferred that the reaction mixture (R_{G}) does not comprise diphenyl sulfone.

It is preferred that component (D) comprises at least 50 % by weight of at least one solvent selected from the group consisting of N-methylpyrrolidone, N,N-dimethylacetamide, dimethylsulfoxide and dimethylformamide based on the total weight of component (D) in the reaction mixture (R_{G}). N-methylpyrrolidone is particularly preferred as component (D).

In a further preferred embodiment, component (D) consists essentially of N-methylpyrrolidone.

"Consist essentially of", in the present case, is understood to mean that component (D) comprises more than 98 % by weight, particularly preferably more than 99 % by weight, more preferably more than 99.5 % by weight, of at least one aprotic polar solvent selected from the group consisting of N-methylpyrrolidone, N,N-dimethylacetamide, dimethylsulfoxide and dimethylformamide with preference given to N-methylpyrrolidone.

In a preferred embodiment, component (D) consists of N-methylpyrrolidone. N-methylpyrrolidone is also referred to as NMP or N-methyl-2-pyrrolidone.

### Examples

### Components used

- DCDPS:: 4,4'-dichlorodiphenyl sulfone,
- DCBPO:: 4,4'dichlorobenzophenone,
- BP:: 4,4'-biphenol,
- Potassium carbonate:: K₂CO₃; anhydrous; volume-average particle size of 34.5 µm,
- NMP:: N-methylpyrrolidone,
- PPSU:: polyphenylensulfone (ULTRASON^{®} P 3010)

### General procedures

The viscosity number of the polymers is determined in a 1 % solution in NMP at 25 °C, according to DIN EN ISO 1628-1.

The isolation of the polymers is carried out by dripping an NMP solution of the polymers in demineralized water at room temperature (25 °C). The drop height is 0.5 m, the throughput is about 2.5 l/h. The beads obtained are then extracted with water (water throughput 160 l/h) at 85 °C for 20 h. The beads are dried at 150 °C for 24 h (hours) at reduced pressure (< 100 mbar) to a residual moisture of below 0.1% by weight.

The obtained amorphous polymers (P) were granulated via a ZSK 18 extruder. The throughput was 2.5 kg/h at a rotation speed of 300 rpm, the temperature of the melt was measured with an inserting thermometer at a melt cake and was below 385°C.

The granules obtained were injection molded at a mass temperature of 370°C and a mold temperature of 140°C to obtain ISO bars (80*10*4 mm*mm*mm) and S2 tensile bars.

The melt stability of the samples was measured at a mass temperature of 400°C, using a capillary rheometer over a period of 60 minutes. Therefore, every five minutes the apparent viscosity of the melt was measured at an apparent shear rate of 55 s⁻¹. The melt stability is the quotient of the apparent viscosity after 60 minutes divided by the apparent viscosity after 5 minutes. The results are shown in table 1.

The glass transition temperature (T_{g}) and the melting point of the obtained products is determined via differential scanning calorimetry DSC at a heating ramp of 20 K/min in the second heating cycle as described above.

The content of benzophenone groups is measured by ¹H-NMR using CDCl₃ as sovent.

The resistance of the polymer against hydraulic fluids, petrol and/or fuel was determined as resistance against Skydrol^{®} LD4 (58 wt.-% tributyl phosphate, 20 to 30 wt.-% dibutylphenyl phosphate, 5 to 10 wt.-% butylphenyl phosphate, 1 to 5 wt.-% 2,6-di-terbutyl-p-kresol, less than 10 wt.-% carboxalate). S2-pullrods were stored in Skydrol^{®} LD4 for 24 hours. In each case, two of the S2-pullrods were bent to a bending radius of 132 mm using a stencil prior to storing them. Using a camera, a picture was taken every minute to determine the time until break.

### Polymer V1

In a 4 liter glass reactor fitted with a thermometer, a gas inlet tube and a Dean-Stark-trap, 522.63 g (1.82 mol) of DCDPS, 372.41 g (2,.00 mol) of 4,4'-dihydroxybiphenyl, 50.22 g (0.20 mol) 4,4'-dichlorobenzophenone, and 304. 05 g (2.20 mol) of potassium carbonate with a volume average particle size of 34.5 µm were suspended in 1152 ml NMP in a nitrogen atmosphere.

The mixture was heated to 190°C within one hour. In the following, the reaction time shall be understood to be the time during which the reaction mixture was maintained at 190°C. The water that was formed in the reaction was continuously removed by distillation, lost NMP was replaced.

At 190°C the reaction was continued for another 5h, then 1500 ml NMP were added to the reactor and the temperature of the suspension was adjusted to 135°C (took 10 minutes). Then Methylchloride was added to the reactor for 60 minutes. Then N₂ was purged through the suspension for another 30 minutes. The solution was then cooled to 80°C and was then transferd into a pressure filter to separate the potassium chloride formed in the reaction by filtration. The obtained polymer solution was then precipitated in water, the resulting polymer beads were separated and then extracted with hot water (85°C) for 20 h. Then the beads were dried at 120°C for 24 h at reduced pressure (< 100 mbar).

### Amorphous polymer (P) 2

In a 4 liter glass reactor fitted with a thermometer, a gas inlet tube and a Dean-Stark-trap, 508.28 g (1,77 mol) of DCDPS, 372.41 g (2.,00 mol) of 4,4'-dihydroxybiphenyl, 62.78 g (0.25 mol) of 4,4'-dichlorobenzophenone, and 304.05 g (2.20 mol) of potassium carbonate with a volume average particle size of 34.5 µm were suspended in 1152 ml NMP in a nitrogen atmosphere.

The mixture was heated to 190°C within one hour. In the following, the reaction time shall be understood to be the time during which the reaction mixture was maintained at 190°C. The water that was formed in the reaction was continuously removed by distillation, lost NMP was replaced.

At 190°C the reaction was continued for another 5h, then 1500 ml NMP were added to the reactor and the temperature of the suspension was adjusted to 135°C (took 10 minutes). Then Methylchloride was added to the reactor for 60 minutes. Then N₂ was purged through the suspension for another 30 minutes. The solution was then cooled to 80°C and was then transferred into a pressure filter to separate the potassium chloride formed in the reaction by filtration. The obtained polymer solution was then precipitated in water, the resulting polymer beads were separated and then extracted with hot water (85°C) for 20 h. Then the beads were dried at 120°C for 24 h at reduced pressure (< 100 mbar).

### Amorphous polymer (P) 3

In a 4 liter glass reactor fitted with a thermometer, a gas inlet tube and a Dean-Stark-trap, 493.92 g (1.72 mol) of DCDPS, 372.41 g (2.00 mol) of 4.4'-dihydroxybiphenyl, 75.33 g (0.3 mol) of 4,4'-dichlorobenzophenone, and 304.05 g (2.20 mol) of potassium carbonate with a volume average particle size of 34.5 µm were suspended in 1152 ml NMP in a nitrogen atmosphere.

The mixture was heated to 190°C within one hour. In the following, the reaction time shall be understood to be the time during which the reaction mixture was maintained at 190 °C. The water that was formed in the reaction was continuously removed by distillation, lost NMP was replaced.

At 190°C the reaction was continued for another 5.5h, then 1500 ml NMP were added to the reactor and the temperature of the suspension was adjusted to 135°C (took 10 minutes). Then Methylchloride was added to the reactor for 60 minutes. Then N₂ was purged through the suspension for another 30 minutes. The solution was then cooled to 80°C and was then transferd into a pressure filter to separate the potassium chloride formed in the reaction by filtration. The obtained polymer solution was then precipitated in water, the resulting polymer beads were separated and then extracted with hot water (85°C) for 20 h. Then the beads were dried at 120°C for 24 h at reduced pressure (< 100 mbar).

### Amorphous polymer (P) 4

In a 4 liter glass reactor fitted with a thermometer, a gas inlet tube and a Dean-Stark-trap, 465.22 g (1.62 mol) of DCDPS, 372.41 g (2.00 mol) of 4,4'-dihydroxybiphenyl, 100.44 g (0.40 mol) of 4,4'-dichlorobenzophenone, and 304.05 g (2.20 mol) of potassium carbonate with a volume average particle size of 34.5 µm were suspended in 1152 ml NMP in a nitrogen atmosphere.

The mixture was heated to 190°C within one hour. In the following, the reaction time shall be understood to be the time during which the reaction mixture was maintained at 190°C. The water that was formed in the reaction was continuously removed by distillation, lost NMP was replaced.

At 190°C the reaction was continued for another 6h, then 1500 ml NMP were added to the reactor and the temperature of the suspension was adjusted to 135°C (took 10 minutes). Then Methylchloride was added to the reactor for 60 minutes. Then N₂ was purged through the suspension for another 30 minutes. The solution was then cooled to 80°C and was then transferd into a pressure filter to separate the potassium chloride formed in the reaction by filtration. The obtained polymer solution was then precipitated in water, the resulting polymer beads were separated and then extracted with hot water (85°C) for 20 h. Then the beads were dried at 120°C for 24 h at reduced pressure (< 100 mbar).

### Polymer V5

In a 4 liter glass reactor fitted with a thermometer, a gas inlet tube and a Dean-Stark-trap, 450.86 g (1.57 mol) of DCDPS, 372.41 g (2.00 mol) of 4,4'-dihydroxybiphenyl, 113.00 g (0.45 mol) of 4,4'-dichlorobenzophenone, and 304.05 g (2.20 mol) of potassium carbonate with a volume average particle size of 34.5 µm were suspended in 1152 ml NMP in a nitrogen atmosphere.

The mixture was heated to 190°C within one hour. In the following, the reaction time shall be understood to be the time during which the reaction mixture was maintained at 190°C. The water that was formed in the reaction was continuously removed by distillation, lost NMP was replaced.

At 190°C the reaction was continued for another 6h, then 1500 ml NMP were added to the reactor and the temperature of the suspension was adjusted to 135°C (took 10 minutes). Then Methylchloride was added to the reactor for 60 minutes. Then N₂ was purged through the suspension for another 30 minutes. The solution was then cooled to 80°C and was then transferd into a pressure filter to separate the potassium chloride formed in the reaction by filtration. The obtained polymer solution was then precipitated in water, the resulting polymer beads were separated and then extracted with hot water (85°C) for 20 h. Then the beads were dried at 120°C for 24 h at reduced pressure (< 100 mbar).

**Table 1:**

| Example | V1 | 2 | 3 | 4 | V5 | PPSU |
|---|---|---|---|---|---|---|
| Filtration time [h] | 8 | 10 | 12 | 14 | >24 | n.d. |
| Content BPO-units [mol%] | 8,7 | 11,2 | 14,0 | 18,7 | 21* | 0 |
| VZ [ml/g] | 68,5 | 72,9 | 67,1 | 68,9 | Not sol. in NMP | 71,6 |
| Tg [°C] Tm [°C] ΔHm [J/g] | 211 none 0 | 207 none 0 | 206 none 0 | 205 none 0 | 200 299 5.2 | 219 |
| Skydrol Res. [h] | <2 | 5 | >24 | >24 | | <2 |
| Q | 1,5 | 1,6 | 1,8 | 1,6 | n.d. | 1,3 |
| Appearance Plate | transparent | transparent | transparent | transparent | opaque | transparent |

| | | | | | | |
|---|---|---|---|---|---|---|
| *Solution not completely homogeneous | | | | | | |

As can be seen from the results given in table 1, if the content of benzophenone units (BPO units) is below 10 mol%, no improvement of the Skydrol-resistance can be detected. If the content of BPO-based units is above 20 mol%, the product can not be isolated since the filtration of the suspension takes more than 24 h. If a small amount of material is precipitated and washed, no homogeneous solution in NMP for V.N. measurements is possible. In CDCl₃ (H-NMR) the product is also not completey soluble, nevertheless the obtained spectra allow to determine the content of BPO-based units. A small amount of the product isolated from trial V5 was melt pressed at 320°C to a thin film. Even though the film thickness was only 50 µm, the sample was opaque.

## Claims

1. An amorphous polymer (P) comprising
segments (S1) of formula 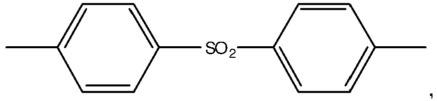
segments (S2) of formula 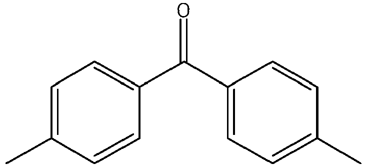 and
segments (S3) of formula 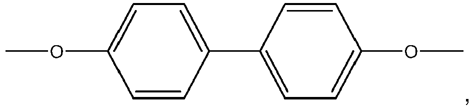
wherein the amorphous polymer (P) comprises
80.1 to 89% by mol of segments (S1) and
11 to 19.9% by mol of segments (S2),
based on the total number of mols of segments (S1) and segments (S2) comprised in the amorphous polymer (P).

2. The amorphous polymer (P) according to claim 1, wherein the amorphous polymer (P) comprises repeat units (RU1) obtainable by the reaction between at least one aromatic dihalogen compound (D1,1) comprising the segment (S1), and at least one aromatic dihydroxy compound (aDHy1).

3. The amorphous polymer (P) according to claim 2, wherein the aromatic dihaloger compound (D1,1) is at least one compound selected from the group consisting of 4,4'-dihalogendiphenylsulfone and 4,4'-bis[(4-chlorophenyl)sulfonyl]-1,1'-biphenyl.

4. The amorphous polymer (P) according to any of claims 1 to 3, wherein the amorphous polymer (P) comprises repeat units (RU2) obtainable by the reaction between at least one dihalogen compound (D2,1) comprising the segment (S2) and at least one aromatic dihydroxy compound (aDHy2).

5. The amorphous polymer (P) according to any of claims 1 to 4, wherein the amorphous polymer (P) has a polydispersity (Q) in the range of 2.0 to ≤ 5.0.

6. The amorphous polymer (P) according to any of claims 1 to 5, wherein the amorphous polymer (P) has an average molecular weight (M_{w}) in the range of 30,000 to 120,000 g/mol, measured using gel permeation chromatography (GPC), wherein dimethylacetamide (DMAc) was used as solvent and narrowly distributed polymethyl methacrylate was used as standard in the measurement.

7. The amorphous polymer (P) according to claim 4, wherein the dihaloger compound (D2,1) is 4,4'-dihalogen benzophenone.

8. The amorphous polymer (P) according to any of claims 1 to 7, wherein the amorphous polymer (P) comprises repeat units (RU3) obtainable by the reaction between at least one aromatic dihydroxy compound (D2,2) comprising the segment (S2) and at least one aromatic dihalogen compound (aDHa1).

9. The amorphous polymer (P) according to any of claims 1 to 8, wherein the amorphous polymer (P) comprises repeat units (RU4) obtainable by the reaction between at least one aromatic dihydroxy compound (D3,1), comprising the segment (S3) and at least one aromatic dihalogen compound (aDHa2).

10. The amorphous polymer (P) according to any of claims 1 to 9, wherein the aromatic dihydroxy compound (aDHy1) and/or (aDHy2) is/are 4,4'-biphenol.

11. The amorphous polymer (P) according to any of claims 1 to 10, wherein the amorphous polymer (P) comprises repeat units (RU1) and (RU2), wherein the repeat units (R1) are obtainable by the reaction between at least one aromatic dihalogen compound (D1,1) comprising the segment (S1), and at least one aromatic dihydroxy compound (aDHy1), and wherein the repeat units (RU2) are obtainable by the reaction between at least one dihalogen compound (D2,1) comprising the segment (S2) and at least one aromatic dihydroxy compound (aDHy2), wherein the amorphous polymer (P) comprises no other repeat units than repeat units (RU1) and (RU2).

12. The amorphous polymer (P) according to any of claims 2 to 11, wherein the repeat units (RU1) are obtained by the reaction of the monomers 4,4'-dichlorodiphenylsulfone and 4,4'-biphenol.

13. The amorphous polymer (P) according to any of claims 4 to 12, wherein the repeat units (RU2) are obtained by the reaction of the monomers 4,4'-dichlorobenzophenone and 4,4'-biphenol.

14. A process for the preparation of the amorphous polymer (P) according to any of claims 1 to 13, by converting a reaction mixture (R_{G}) comprising as components:
(A1) at least one aromatic dihalogen sulfone compound (D1,1),
(A2) at least one aromatic dihalogen ketone compound (D2,1),
(B1) 4,4'-biphenol,
(C) at least one carbonate component comprising at least 80% by weight of potassium carbonate, based on the overall weight of component (C) in the reaction mixture (R_{G}),
(D) at least one aprotic polar solvent.

15. A composition comprising the amorphous polymer (P) according to claims 1 to 13 or the amorphous polymer (P) prepared according to claim 14.

16. An article comprising the amorphous polymer (P) according to claims 1 to 13 or the amorphous polymer (P) prepared according to claim 14 or the composition according to claim 15.

17. The article according to claim 16, wherein it is selected from the group consisting of a fitting, pipe, a valve, a manifold, an aircraft interior panel or component, a cookware, a medical instrument or part of instrument, a medical case or tray, a laboratory animal cage, a laboratory equipment, a coating, a composite, a fiber and a fabric.

18. The article according to claim 16 or 17, wherein the article is transparent.

## Patentansprüche

1. Amorphes Polymer (P), umfassend
Segmente (S1) der Formel 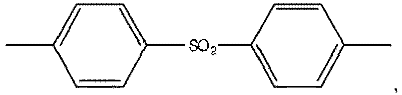
Segmente (S2) der Formel 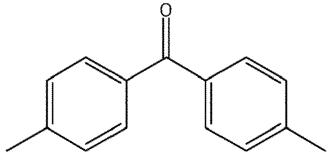 und
Segmente (S3) der Formel 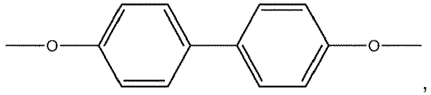
wobei das amorphe Polymer (P)
80,1 bis 89 Mol-% Segmente (S1) und
11 bis 19,9 Mol-% Segmente (S2),
bezogen auf die Gesamtzahl der Mole von Segmenten (S1) und Segmenten (S2), die in dem amorphen Polymer (P) enthalten sind, umfasst.

2. Amorphes Polymer (P) nach Anspruch 1, wobei das amorphe Polymer (P) Wiederholungseinheiten (RU1) umfasst, die durch die Umsetzung zwischen mindestens einer aromatischen Dihalogenverbindung (D1,1), die das Segment (S1) umfasst, und mindestens einer aromatischen Dihydroxyverbindung (aDHy1) erhältlich sind.

3. Amorphes Polymer (P) nach Anspruch 2, wobei es sich bei der aromatischen Dihalogenverbindung (D1,1) um mindestens eine Verbindung handelt, die aus der Gruppe bestehend aus 4,4'-Dihalogendiphenylsulfon und 4,4'-Bis[(4-chlorphenyl)sulfonyl]-1,1'-biphenyl ausgewählt ist.

4. Amorphes Polymer (P) nach einem der Ansprüche 1 bis 3, wobei das amorphe Polymer (P) Wiederholungseinheiten (RU2) umfasst, die durch die Umsetzung zwischen mindestens einer Dihalogenverbindung (D2,1), die das Segment (S2) umfasst, und mindestens einer aromatischen Dihydroxyverbindung (aDHy2) erhältlich sind.

5. Amorphes Polymer (P) nach einem der Ansprüche 1 bis 4, wobei das amorphe Polymer (P) eine Polydispersität (Q) im Bereich von 2,0 bis ≤ 5,0 aufweist.

6. Amorphes Polymer (P) nach einem der Ansprüche 1 bis 5, wobei das amorphe Polymer (P) ein mittels Gelpermeationschromatographie (GPC) gemessenes mittleres Molekulargewicht (M_{w}) im Bereich von 30.000 bis 120.000 g/mol aufweist, wobei als Lösungsmittel Dimethylacetamid (DMAc) verwendet wurde und gegen engverteiltes Polymethylmethacrylat als Standard gemessen wurde.

7. Amorphes Polymer (P) nach Anspruch 4, wobei es sich bei der Dihalogenverbindung (D2,1) um 4,4'-Dihalogenbenzophenon handelt.

8. Amorphes Polymer (P) nach einem der Ansprüche 1 bis 7, wobei das amorphe Polymer (P) Wiederholungseinheiten (RU3) umfasst, die durch die Umsetzung zwischen mindestens einer aromatischen Dihydroxyverbindung (D2,2), die das Segment (S2) umfasst, und mindestens einer aromatischen Dihalogenverbindung (aDHa1) erhältlich sind.

9. Amorphes Polymer (P) nach einem der Ansprüche 1 bis 8, wobei das amorphe Polymer (P) Wiederholungseinheiten (RU4) umfasst, die durch die Umsetzung zwischen mindestens einer aromatischen Dihydroxyverbindung (D3,1), die das Segment (S3) umfasst, und mindestens einer aromatischen Dihalogenverbindung (aDHa2) erhältlich sind.

10. Amorphes Polymer (P) nach einem der Ansprüche 1 bis 9, wobei es sich bei der aromatischen Dihydroxyverbindung (aDHy1) und/oder (aDHy2) und 4,4'-Biphenol handelt.

11. Amorphes Polymer (P) nach einem der Ansprüche 1 bis 10, wobei das amorphe Polymer (P) Wiederholungseinheiten (RU1) und (RU2) umfasst, wobei die Wiederholungseinheiten (R1) durch die Umsetzung zwischen mindestens einer aromatischen Dihalogenverbindung (D1,1), die das Segment (S1) umfasst, und mindestens einer aromatischen Dihydroxyverbindung (aDHy1) erhältlich sind und wobei die Wiederholungseinheiten (RU2) durch die Umsetzung zwischen mindestens einer Dihalogenverbindung (D2,1), die das Segment (S2) umfasst, und mindestens einer aromatischen Dihydroxyverbindung (aDHy2) erhältlich sind, wobei das amorphe Polymer (P) keine anderen Wiederholungseinheiten als Wiederholungseinheiten (RU1) und (RU2) umfasst.

12. Amorphes Polymer (P) nach einem der Ansprüche 2 bis 11, wobei die Wiederholungseinheiten (RU1) durch die Umsetzung der Monomere 4,4'-Dichlordiphenylsulfon und 4,4'-Biphenol erhalten werden.

13. Amorphes Polymer (P) nach einem der Ansprüche 4 bis 12, wobei die Wiederholungseinheiten (RU2) durch die Umsetzung der Monomere 4,4'-Dichlorbenzophenon und 4,4'-Biphenol erhalten werden.

14. Verfahren zur Herstellung des amorphen Polymers (P) nach einem der Ansprüche 1 bis 13 durch Umsetzen einer Reaktionsmischung (R_{G}), die als Komponenten:
(A1) mindestens eine aromatische Dihalogensulfonverbindung (D1,1),
(A2) mindestens eine Dihalogenketonverbindung (D2,1),
(B1) 4,4'-Biphenol,
(C) mindestens eine Carbonatkomponente, die mindestens 80 Gew.-% Kaliumcarbonat umfasst, bezogen auf das Gesamtgewicht von Komponente (C) in der Reaktionsmischung (R_{G}),
(D) mindestens ein aprotisches polares Lösungsmittel
umfasst.

15. Zusammensetzung, umfassend das amorphe Polymer (P) nach einem der Ansprüche 1 bis 13 oder das nach Anspruch 14 hergestellte amorphe Polymer (P).

16. Gegenstand, umfassend das amorphe Polymer (P) nach einem der Ansprüche 1 bis 13 oder das nach Anspruch 14 hergestellte amorphe Polymer (P) oder die Zusammensetzung nach Anspruch 15.

17. Gegenstand nach Anspruch 16, wobei er aus der Gruppe bestehend aus einer Armatur, einer Leitung, einem Ventil, einem Verteiler, einer Tafel oder einem Bauteil für den Innenraum von Luftfahrzeugen, einem Kochgeschirr, einem medizinischen Instrument oder Instrumententeil, einem medizinischen Koffer oder einer medizinischen Schale, einem Labortierkäfig, einem Laborgerät, einer Beschichtung, einem Verbund, einer Faser und einem textilen Flächengebilde ausgewählt ist.

18. Gegenstand nach Anspruch 16 oder 17, wobei der Gegenstand transparent ist.

## Revendications

1. Polymère amorphe (P) comprenant
des segments (S1) de formule 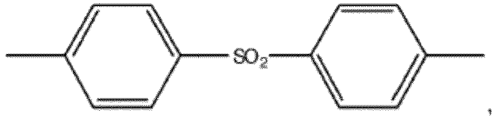
des segments (S2) de formule 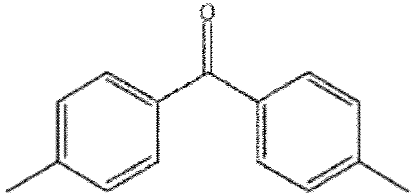 et
des segments (S3) de formule 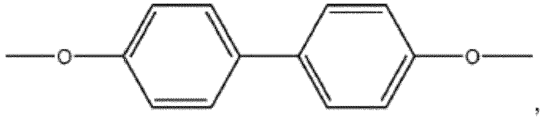
le polymère amorphe (P) comprenant
80,1 à 89 % en moles de segments (S1) et
11 à 19,9 % en moles de segments (S2),
sur la base du nombre total de moles de segments (S1) et de segments (S2) compris dans le polymère amorphe (P).

2. Polymère amorphe (P) selon la revendication 1, le polymère amorphe (P) comprenant des motifs répétitifs (RU1) pouvant être obtenus par la réaction entre au moins un composé dihalogéné aromatique (D1,1) comprenant le segment (S1), et au moins un composé dihydroxy aromatique (aDHy1).

3. Polymère amorphe (P) selon la revendication 2, le composé dihalogéné aromatique (D1,1) étant au moins un composé choisi dans le groupe constitué par une 4,4'-dihalogénodiphénylsulfone et 4,4'-bis[(4-chlorophényl)sulfonyl]-1,1'-biphényle.

4. Polymère amorphe (P) selon l'une quelconque des revendications 1 à 3, le polymère amorphe (P) comprenant des motifs répétitifs (RU2) pouvant être obtenus par la réaction entre au moins un composé dihalogéné (D2,1) comprenant le segment (S2) et au moins un composé dihydroxy aromatique (aDHy2).

5. Polymère amorphe (P) selon l'une quelconque des revendications 1 à 4, le polymère amorphe (P) ayant une polydispersité (Q) dans la plage de 2,0 à ≤ 5,0.

6. Polymère amorphe (P) selon l'une quelconque des revendications 1 à 5, le polymère amorphe (P) ayant un poids moléculaire moyen (M_{w}) dans la plage de 30 000 à 120 000 g/mole, mesuré en utilisant une chromatographie à perméation de gel (GPC), du diméthylacétamide (DMAc) ayant été utilisé comme solvant et du poly(méthacrylate de méthyle) distribué de manière étroite ayant été utilisé comme référence dans la mesure.

7. Polymère amorphe (P) selon la revendication 4, le composé dihalogéné (D2,1) étant une 4,4'-dihalogénobenzophénone.

8. Polymère amorphe (P) selon l'une quelconque des revendications 1 à 7, le polymère amorphe (P) comprenant des motifs répétitifs (RU3) pouvant être obtenus par la réaction entre au moins un composé dihydroxy aromatique (D2,2) comprenant le segment (S2) et au moins un composé dihalogéné aromatique (aDHa1).

9. Polymère amorphe (P) selon l'une quelconque des revendications 1 à 8, le polymère amorphe (P) comprenant des motifs répétitifs (RU4) pouvant être obtenus par la réaction entre au moins un composé dihydroxy aromatique (D3,1), comprenant le segment (S3) et au moins un composé dihalogéné aromatique (aDHa2).

10. Polymère amorphe (P) selon l'une quelconque des revendications 1 à 9, le(s) composé(s) dihydroxy aromatique (aDHy1) et/ou (aDHy2) étant le 4,4'-biphénol.

11. Polymère amorphe (P) selon l'une quelconque des revendications 1 à 10, le polymère amorphe (P) comprenant des motifs répétitifs (RU1) et (RU2), les motifs répétitifs (R1) pouvant être obtenus par la réaction entre au moins un composé dihalogéné aromatique (D1,1) comprenant le segment (S1), et au moins un composé dihydroxy aromatique (aDHy1), et les motifs répétitifs (RU2) pouvant être obtenus par la réaction entre au moins un composé dihalogéné (D2,1) comprenant le segment (S2) et au moins un composé dihydroxy aromatique (aDHy2), le polymère amorphe (P) ne comprenant pas d'autres motifs répétitifs que les motifs répétitifs (RU1) et (RU2).

12. Polymère amorphe (P) selon l'une quelconque des revendications 2 à 11, les motifs répétitifs (RU1) étant obtenus par la réaction des monomères 4,4'-dichlorodiphénylsulfone et 4,4'-biphénol.

13. Polymère amorphe (P) selon l'une quelconque des revendications 4 à 12, les motifs répétitifs (RU2) étant obtenus par la réaction des monomères 4,4'-dichlorobenzophénone et 4,4'-biphénol.

14. Procédé pour la préparation du polymère amorphe (P) selon l'une quelconque des revendications 1 à 13, par conversion d'un mélange réactionnel (R_{G}) comprenant en tant que composants :
(A1) au moins un composé de type dihalogénosulfone aromatique (D1,1),
(A2) au moins un composé de type dihalogénocétone aromatique (D2,1),
(B1) du 4,4'-biphénol,
(C) au moins un composant de type carbonate comprenant au moins 80 % en poids de carbonate de potassium, sur la base du poids global du composant (C) dans le mélange réactionnel (R_{G}),
(D) au moins un solvant polaire aprotique.

15. Composition comprenant le polymère amorphe (P) selon les revendications 1 à 13 ou le polymère amorphe (P) préparé selon la revendication 14.

16. Article comprenant le polymère amorphe (P) selon les revendications 1 à 13 ou le polymère amorphe (P) préparé selon la revendication 14 ou la composition selon la revendication 15.

17. Article selon la revendication 16, qui est choisi dans le groupe constitué par un rapport, un tuyau, une soupape, un collecteur, un panneau ou composant intérieur d'aéronef, un ustensile de cuisine, un instrument médical ou une partie d'instrument médical, une mallette médicale ou un plateau médical, une cage d'animal de laboratoire, un appareil de laboratoire, un revêtement, un composite, une fibre et un tissu.

18. Article selon la revendication 16 ou 17, l'article étant transparent.
